(19) Europäisches Patentamt

European Patent Office

Office européen des brevets

(11) **EP 1 983 021 B1**

(12) **EUROPÄISCHE PATENTSCHRIFT**

(45) Veröffentlichungstag und Bekanntmachung des Hinweises auf die Patenterteilung:
**25.11.2009  Patentblatt 2009/48**

(51) Int Cl.:
*C08K 3/04* (2006.01)      *B60C 1/00* (2006.01)
*C08L 7/00* (2006.01)      *C08L 9/00* (2006.01)

(21) Anmeldenummer: **08150580.2**

(22) Anmeldetag: **24.01.2008**

(54) **Kautschukmischung, vorzugsweise für Laufstreifen von Reifen**

Natural rubber mixture, mainly for tread strips of tyres

Mélange de caoutchouc, de préférence pour bandes de roulement de pneus

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **18.04.2007  DE 102007018181**

(43) Veröffentlichungstag der Anmeldung:
**22.10.2008  Patentblatt 2008/43**

(73) Patentinhaber: **Continental Aktiengesellschaft**
**30165 Hannover (DE)**

(72) Erfinder:
- **Kleffmann, Jens, Dr.**
  **30167, Hannover (DE)**
- **Meissner, Steffi**
  **31552, Rodenberg (DE)**
- **Weber, Christian, Dr.**
  **30826, Garbsen (DE)**
- **Kramer, Thomas, Dr.**
  **31832, Springe (DE)**
- **De-Riva-Perez, Julian**
  **30171, Hannover (DE)**
- **Kreye, Marc, Dr.**
  **38104, Braunschweig (DE)**

(74) Vertreter: **Finger, Karsten**
**Continental Aktiengesellschaft**
**Patentabteilung**
**Postfach 169**
**30001 Hannover (DE)**

(56) Entgegenhaltungen:
**EP-A- 1 582 559       EP-A- 1 614 711**
**WO-A-2006/133770    US-A1- 2001 031 823**
**US-A1- 2005 063 893**

**Beschreibung**

Die Erfindung betrifft eine mit Schwefel vulkanisierbare, zumindest einen Dienkautschuk aufweisende Kautschukmischung, vorzugsweise für den Laufstreifen eines Reifens, insbesondere eines Nutzfahrzeugreifens. Die Erfindung betrifft ferner einen Reifen, insbesondere einen Nutzfahrzeugreifen, dessen Laufstreifen zumindest zum Teil aus der mit Schwefel vulkanisierten Kautschukmischung besteht.

Die Kautschukmischungen für Laufstreifen von Fahrzeugreifen, insbesondere Fahrzeugluftreifen, besitzen aufgrund ihrer gewünschten Eigenschaften im Hinblick auf optimales Fahrverhalten wie z. B. Handling, Nassrutsch- und Bremsverhalten, Rollwiderstand und Abriebverhalten speziell auf diese Eigenschaften optimierte Zusammensetzungen. Diese für die optimalen Fahreigenschaften verwendeten Kautschukmischungen weisen im Allgemeinen eine schlechte thermische Leitfähigkeit (Wärmeleitfähigkeit und Temperaturleitfähigkeit) auf.

Beim Gebrauch des Reifens wird durch Walk- und Fliehkräfte und durch die damit verbundenen dynamischen Verformungen aufgrund des Hystereseverlustes des Vulkanisates thermische Energie entwickelt, die nur sehr schlecht abgeführt werden kann. Damit geht eine Wärmeentwicklung im Reifen, dort insbesondere an den Gürtelkanten, einher. Dies führt zu einer Beeinträchtigung der Reifenhaltbarkeit vor allem in heißen Ländern sowie der Runderneuerungsfähigkeit, die insbesondere bei Gürtelkantenlockerungen bzw. - lösungen zu beobachten ist. Schlimmstenfalls kommt es zur kompletten Gürtelablösung, die eine vollständige Zerstörung der Reifens zur Folge hat. Das Problem der Wärmeabführung ist bei Nutzfahrzeugreifen besonders zu beachten, da diese Reifen hohen Walkkräften ausgesetzt sind und die Laufstreifen sehr dick ausgebildet sind, was eine Wärmeabführung an die Umgebungsluft erschwert.

Es ist bekannt, dass sich der Wärmeaufbau und damit die Temperatur im Bereich des Gürtels und insbesondere der Gürtelkanten reduzieren lässt, indem Mischungen verwendet werden, deren Vulkanisate einen niedrigen Hystereseverlust aufweisen. Solche Mischungen, die anstelle von herkömmlichen rußgefüllten Mischungen verwendet werden, sind beispielsweise Mischungen, die Kieselsäure als Füllstoffbasis in Kombination mit einem Silankupplungsagens enthalten. Kieselsäurehaltige Mischungen weisen allerdings in der Regel keine gute Wärmeleitfähigkeit auf, so dass entstandene Wärme nur schlecht abgeleitet werden kann. Darüber hinaus zeichnen sich Vulkanisate von kieselsäurehaltige Mischungen durch eine im Vergleich zu reinen Rußmischungen geringere Abriebbeständigkeit aus, was für verschiedene Einsatzmöglichkeiten, z. B. bei Nutzfahrzeugreifen, nicht gewünscht ist.

Aus der DE-OS 1755301 ist es bekannt, die Temperaturentwicklung in Fahrzeugluftreifen und insbesondere in den Laufflächen zu verringern, indem der Fahrzeugluftreifen - und insbesondere die Reifenlauffläche - homogen in den Kautschuk eingearbeitet Graphit enthält. Ein Laufstreifen, der in seiner Gesamtheit aus einer Graphit enthaltenden Kautschukmischung hergestellt ist, ermöglicht somit durch seine verbesserte Wärmeleitfähigkeit bei früher üblichen Diagonalreifen eine Erniedrigung der Temperatur in der Schulter des Laufstreifens. Die Zugabe von Graphit zu Kautschukmischungen speziell für Laufstreifen hat aber zur Folge, dass sich die Eigenschaften der vulkanisierten Mischungen verändern. Durch die Einmischung von Graphit in Kautschukmischungen für Laufstreifen werden beispielsweise der Nassgriff, der Trockengriff und vor allem der Abrieb negativ beeinflusst. Dies ist unter anderem auf die Gleiteigenschaften der Graphitpartikel zurückzuführen.

In der EP-A-1 031 441 wird zur effektiven Absenkung der Temperatur von Gummimischungen im gürtelnahen Bereich von Fahrzeugluftreifen vorgeschlagen, dass am Profilrillengrund und/oder im Bereich der Reifenschultern eine Gummimischung angeordnet ist, deren Wärmeleitfähigkeit um mindestens 5 % höher liegt als die Wärmeleitfähigkeit der sie umgebenden Gummimischung. Zur Erhöhung der Wärmeleitfähigkeit der Mischungen werden neben Ruß Füllstoffe wie Aluminium, Magnesium, Kupfer, Zink, Nickel oder metallenthaltende Substanzen, wie z. B. Zinkoxid, Aluminiumhydroxid, Aluminiumoxid, Silicium-Aluminiumoxide, Magnesiumoxid, Chromoxid, Titanoxid oder Siliciumcarbid, als Zuschlagstoffe vorgeschlagen.

In der US 3,954,131 werden Fahrzeugluftreifen mit Notlaufeigenschaften beschrieben, die an den Seitenwänden Einlagen aus einer Kautschukmischung aufweisen, die für eine gute Wärmeleitfähigkeit Acetylenruß enthalten.

Der vorliegenden Erfindung liegt nun die Aufgabe zugrunde, Kautschukmischungen vorzugsweise für Laufstreifen von Reifen bereitzustellen, deren Vulkanisate sich durch eine verbesserte Wärmeleitfähigkeit bei sonst in Wesentlichen gleich bleibenden Eigenschaften auszeichnen. Reifen, deren Laufstreifen aus einer derartigen Mischung gefertigt sind, sollen sich durch effektive Temperaturabsenkung im Gürtelkantenbereich beim Fahrbetrieb auszeichnen. Damit soll deren Neigung zur Rissbildung reduziert und deren Runderneuerungsfähigkeit verbessert werden.

Gelöst wird diese Aufgabe erfindungsgemäß dadurch, dass die Kautschukmischung

- 5 - 60 phr eines behandelten Rußes

mit a) einer Jodadsorptionszahl von 50 bis 70 g/kg, vorzugsweise von 55 - 65 g/kg,
mit b) einer DBP-Zahl von 140 - 260 $cm^3$/100 g, vorzugsweise von 150 - 200 $cm^3$/100 g, besonders bevorzugt von 160 - 170 $cm^3$/100 g, und
mit c) einer BET-Oberfläche von 30 - 60 $m^2$/g, vorzugsweise von 40 - 50 $m^2$/g,

wobei der Ruß mittels eines kontinuierlichen Elektrowärmeofenbehandlungsprozesses herstellbar ist, der Folgendes umfasst:

a. Bereitstellen eines Elektrowärmeofens, wobei ein Abschnitt des Ofens eine Wirbelzone definiert und ein zweiter Abschnitt eine Überbettzone definiert; und mehrerer Düsen zum Einleiten von Wirbelgas in den Ofen;

b. Einleiten eines nicht-reaktiven Wirbelgases durch die Düsen, dergestalt, dass das Gas einen Aufwärtsstrom in dem Ofen definiert;

c. Einleiten von unbehandeltem Ruß in den Ofen mit einer zuvor festgelegten Rate, dergestalt, dass der Ruß eine Wirbelschicht bildet;

d. Beaufschlagen einer Elektrode in dem Ofen mit Energie, um die Wirbelschicht zu erwärmen; und

e. kontinuierliches Auffangen des behandelten Rußes aus einem Ofenausgaberohr.

Es wurde festgestellt, dass durch einen derartigen Ruß mit den angegebenen Eigenschaften in den angegebenen Mengen, vorzugsweise in der Laufstreifenmischung, Reifen hergestellt werden können, die sich durch eine verbesserte Gürtelkantenhaltbarkeit auszeichnen. Die verbesserte Gürtelkantenhaltbarkeit liegt in der verbesserten Wärmeleitfähigkeit der Mischung durch die Anwesenheit des erfindungsgemäßen Rußes begründet. Die erreichte Wärmeleitfähigkeit ist gegenüber Mischungen, die andere bekannte Ruße als Füllstoffe enthalten, besonders hoch. Es hat sich gezeigt, dass Reifen, vorzugsweise deren Laufstreifen, die aus der erfindungsgemäßen Kautschukmischung hergestellt werden, zu weniger Rissbildung neigen, wobei die Runderneuerungsfähigkeit der Reifen verbessert wird.

Der Austausch eines Standard ASTM Rußes, beispielsweise des dem Fachmann bekannten Typs N121, durch den erfindungsgemäßen Ruß ermöglicht in üblichen Kautschukmischungen eine Erhöhung der Wärmeleitfähigkeit von 1,3% bis 1,8% pro phr ausgetauschten Standard ASTM Rußes. Gegenüber Acetylenruß wird mit dem erfindungsgemäßen Ruß sogar eine Wärmeleitfähigkeitserhöhung in üblichen Kautschukmischungen um mindestens 30 % pro phr ausgetauschten Standard ASTM Rußes erreicht.

Zur Offenbarung und Ausführbarkeit des kontinuierlichen Elektrowärmeofenbehandlungsprozesses wird auf die WO 2005/028569 A2 und die US 20050062205 A1 verwiesen, deren gesamter Inhalt auch Inhalt der vorliegenden Patentanmeldung ist.

Bei den erfindungsgemäßen Rußen handelt es sich vorzugsweise um behandelte thermische Ruße und/oder vorzugsweise um Ofenruße, so genannte Furnace-Ruße.

Die Wärmebehandlung erfolgt vorzugsweise zwischen 800 und 3000˚C.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. In der Kautschukmischung addieren sich die phr-Anteile der verschiedenen Kautschuke zu 100.

Die Jodadsorptionszahl wird gemäß ASTM-D 1510, die DBP-Zahl (Dibutylphthalat-Zahl) gemäß ASTM-D 2414 und die BET-Oberfläche nach DIN 66131 und 66132 bestimmt. Die Teilchendurchmesser liegen vorzugsweise zwischen 20 und 50 nm. Es kann z. B. ein Ruß des Typs SCD-205 (PUREBLACK®-205) der Columbian Chemicals Company eingesetzt werden.

Neben der Verwendung der erfindungsgemäßen Kautschukmischung für Laufstreifen zur Reduzierung der Temperaturen im Bereich der Gürtelkanten, können prinzipiell auch andere Reifenbauteile im Kopf- und Fußbereich des Reifens aus der erfindungsgemäßen Kautschukmischung hergestellt werden, um generell Temperaturen, insbesondere im Bereich der Festigkeitsträgerenden, zu reduzieren.

Eine Weiterbildung der Erfindung sieht vor, dass die Kautschukmischung 5 bis 15 phr des behandelten Rußes enthält. Mit diesen Mengen konnten sehr gute Ergebnisse hinsichtlich der gewünschten Eigenschaftsverbesserungen erreicht werden, insbesondere wenn entsprechende Mengen sonst üblicherweise verwendeter Ruße durch den erfindungsgemäßen Ruß ersetzt werden.

Gemäß einer vorteilhaften Ausgestaltung der Erfindung ist vorgesehen, dass die Kautschukmischung zusätzlich 20 bis 45 phr eines hoch abriebbeständigen Rußes mit einer Jodadsorptionszahl von mehr als 100 bis 170 g/kg und einer DBP-Zahl von 90 - 140 cm$^3$/100g enthält. Derartige hoch abriebbeständige Ruße werden vorzugsweise bei Laufstreifenmischungen von Reifen eingesetzt, da sie mögliche negative, durch die Verwendung der erfindungsgemäßen Furnace-Ruße verursachten Auswirkungen auf bestimmte Eigenschaften der Kautschukmischungen bzw. der daraus hergestellten Vulkanisate abfangen bzw. gänzlich vermeiden. Gemeint sind Eigenschaften, die nicht die Wärmeleitfähigkeit betreffen, sondern beispielsweise die Steifigkeit, das Abriebs- oder Rissverhalten der Vulkanisate. Hoch abriebbeständige Ruße sind beispielsweise solche der Typen N220, N121, N115, HV3396, P16 oder HP180.

Als besonders vorteilhaft hat sich herausgestellt, dass bei Kombination eines oder mehrerer erfindungsgemäßer Ruße mit einem oder mehrerer hoch abriebbeständiger Ruße die üblicherweise verwendete Gesamtmenge des Füllstoffs Ruß gleich bleibend gewählt werden kann. Die Gesamtfiillstoffmenge muss also gegenüber dem Stand der Technik vorteilhaft nicht angepasst werden, so dass sich keine Eigenschaftsveränderungen aufgrund neuer Füllstoffmengenzusammensetzungen ergeben.

Alternativ zu dem Vorgenannten ist vorgesehen, dass die Kautschukmischung zusätzlich 20 bis 45 phr eines Rußes mit einer Jodadsorptionszahl von 60 - 100 g/kg und einer DBP-Zahl von 70 - 140 cm$^3$/100g enthält. Derartige Ruße werden vorzugsweise bei Kautschukmischungen eingesetzt, die für andere Reifenteile als für den Laufstreifen verwendet werden. Dies sind vorzugsweise der Kopf- oder Fußbereich eines Reifens und insbesondere der Bereich der Festigkeitsträgerenden.

Eine vorteilhafte Ausgestaltung der Erfindung sieht vor, dass die Kautschukmischung keinen Acetylenruß enthält. Es hat sich gezeigt, dass sich der umstrittene Acetylenruß vollständig ersetzen lässt.

Acetylenruß wird durch thermische Zersetzung von Acetylen hergestellt. Er zeichnet sich durch eine hohe spezifische Oberfläche, einen überdurchschnittlichen Anteil an graphitähnlichen Strukturen und einen sehr niedrigen Gehalt an sauerstoffhaltigen Gruppen aus. Acetylenruße weisen in der Regel eine DBP-Zahl zwischen 150 und 260 cm$^3$/100 g und eine Jodadsorptionszahl > 85 g/kg auf. Die Teilchendurchmesser der Primärpartikel liegen zwischen 30 und 45 nm.

Die mit Schwefel vulkanisierbare Kautschukmischung kann unterschiedlichste dem Fachmann für die Anwendung in Reifen bekannte Kautschuke enthalten, von denen jedoch zumindest einer aus der Gruppe der Dienkautschuke ausgewählt sein muss. Zu den Dienkautschuken zählen alle Kautschuke mit einer ungesättigten Kohlenstoffkette, die sich zumindest teilweise von konjugierten Dienen ableiten. Besonders bevorzugt ist, wenn der Dienkautschuk oder die Dienkautschuke ausgewählt ist bzw. sind aus der Gruppe, bestehend aus Naturkautschuk (NR), synthetischem Polyisopren (IR), Polybutadien (BR) und StyrolButadien-Copolymer (SBR, E-SBR, S-SBR). Diese Dienelastomere lassen sich gut zu der erfindungsgemäßen Kautschukmischung verarbeiten und zeigen gute Reifeneigenschaften.

Insbesondere für den Einsatz der Kautschukmischung als Laufstreifen für Nutzfahrzeugreifen ist es von Vorteil, wenn die Mischung zumindest 95 phr Naturkautschuk enthält. Vulkanisate aus Mischungen mit einem derart hohen Anteil an Naturkautschuk zeichnen sich durch eine besonders hohe Weiterreißfestigkeit aus, was im Reifen zu einer Verminderung von Schnitten und Ausbrüchen (Chippinig und Chunking) im Laufstreifen führt.

Die Kautschukmischung kann neben dem erfindungsgemäßen, aber auch neben dem hoch abriebbeständigen Ruß noch weitere Füllstoffe, wie beispielsweise Kieselsäure, Aluminiumoxide, Alumosilicate, Schichtsilikate, Kreide, Stärke, Magnesiumoxid, Titandioxid oder Kautschukgele, in üblichen Mengen enthalten.

Zur Verbesserung der Verarbeitbarkeit und zur Anbindung von Füllstoffen, wie beispielsweise Kieselsäure, an den Dienkautschuk können Kupplungsagenzien, z. B. Silan-Kupplungsagenzien, in üblichen Mengen in den Kautschukmischungen eingesetzt werden.

Des Weiteren kann die erfindungsgemäße Kautschukmischung übliche Zusatzstoffe in üblichen Gewichtsteilen enthalten. Zu diesen Zusatzstoffen zählen z. B. Weichmacher, Alterungsschutzmittel, wie z. B. N-Phenyl-N'-(I:3-dimethylbutyl)-p-phenylendiamin (6PPD), N-Isopropyl-N'-phenyl-p-phenylendiamin (IPPD), 2,2,4-Trimethyl-1,2-dihydrochinolin (TMQ) und andere Substanzen, wie sie beispielsweise aus J. Schnetger, Lexikon der Kautschuktechnik, 2. Auflage, Hüthig Buch Verlag, Heidelberg, 1991, S. 42-48 bekannt sind, Verarbeitungshilfsmittel wie z. B. Zinkoxid und Fettsäuren wie Stearinsäure, Wachse und Mastikationshilfsmittel wie z. B. 2,2'-Dibenzamidodiphenyldisulfid (DBD).

Die Vulkanisation wird in Anwesenheit von Schwefel oder Schwefelspendern durchgeführt, wobei einige Schwefelspender zugleich als Vulkanisationsbeschleuniger wirken können. Als Schwefelspender können dabei beispielsweise Thiuramderivate wie Tetramethylthiuramdisulfid und Dipentamethylenthiuramtetrasulfid, Morpholinderivate wie Dimorpholyldisulfid, Dimorpholyltetrasulfid und 2-Morpholinodithiobenzothiazol sowie Caprolactamdisulfid verwendet werden. Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt.

Des Weiteren kann die Kautschukmischung vulkanisationsbeeinflussende Substanzen, wie Vulkanisationsbeschleuniger, Vulkanisationsverzögerer und Vulkanisationsaktivatoren, in üblichen Mengen enthalten, um die erforderliche Zeit und/oder die erforderliche Temperatur der Vulkanisation zu kontrollieren und die Vulkanisateigenschaften zu verbessern. Die Vulkanisationsbeschleuniger können dabei zum Beispiel ausgewählt sein aus folgenden Beschleunigergruppen: Thiazolbeschleuniger wie z. B. 2-Mercaptobenzothiazol, Sulfenamidbeschleuniger wie z. B. Benzothiazyl-2-cyclohexylsulfenamid, Guanidinbeschleuniger wie z. B. Diphenylguanidin, Thiurambeschleuniger wie z. B. Tetrabenzylthiuramdisulfid, Dithiocarbamatbeschleuniger wie z. B. Zinkdibenzyldithiocarbamat, Aminbeschleuniger wie z. B. Cyclohexylethylamin, Thioharnstoffe wie z. B. Ethylenthioharnstoff, Xanthogenatbeschleuniger, Disulfide. Die Beschleuniger können auch in Kombination miteinander eingesetzt werden, wobei sich synergistische Effekte ergeben können.

Die Herstellung der erfindungsgemäßen Kautschukmischung erfolgt auf herkömmliche Art und Weise in einer oder mehreren Mischstufen. Anschließend wird die gemischte Mischung weiterverarbeitet, z. B. durch einen Extrusionsvorgang und in die entsprechende Form eines Laufstreifenrohlings, z. B. für einen Nutzfahrzeugreifen, gebracht.

Ein so erzeugter Laufstreifenmischungsrohling wird bei der Herstellung des Reifenrohlings, insbesondere Fahrzeugluftreifenrohlings, wie bekannt aufgelegt. Der Laufstreifen kann aber auch auf einen Reifenrohling, der bereits alle Reifenteile bis auf den Laufstreifen enthält, in Form eines Kautschukmischungsstreifens aufgewickelt werden. Nach der Vulkanisation des Fahrzeugreifens weist der Reifen eine hohe Abriebbeständigkeit und eine hohe Haltbarkeit der Gürtelkanten auf. Es ist bei den Reifen unerheblich, ob der gesamte Laufstreifen aus einer einzigen Mischung hergestellt worden ist oder z. B. einen Cap- und Base-Aufbau aufweist, denn wichtig ist, dass zumindest die in unmittelbarer Nähe des Gürtels vorliegende Mischung erfindungsgemäß ausgebildet ist.

Die mit den erfindungsgemäßen Mischungen als Laufstreifen hergestellten Reifen zeichnen sich durch eine hohe Haltbarkeit aus und die Temperaturen im Gürtelkantenbereich werden effektiv abgesenkt, was vor allem beim Einsatz in Nutzfahrzeugreifen, die z. B. einen Dreiecksgürtel aufweisen, von Vorteil ist und zusätzlich die Runderneuerungsfähigkeit der Nutzfahrzeugreifen verbessert.

Grundsätzlich ist die erfindungsgemäße Kautschukmischung für die Herstellung aller Elastomerprodukte verwendbar, die durch Hystereseverluste hohen Temperaturen ausgesetzt sind und gute Rissfestigkeiten und Weiterreißfestigkeiten aufweisen müssen. Hierzu zählen beispielsweise Gummiwalzen, Gummilager, Riemen oder Förderbänder.

Die Erfindung soll nun anhand von Vergleichs- und Ausführungsbeispielen, die in den Tabellen 1 bis 4 zusammengefasst sind, näher erläutert werden.

Bei sämtlichen in den Tabellen 1 und 3 enthaltenen Mischungsbeispielen sind die angegebenen Mengenangaben Gewichtsteile, die auf 100 Gewichtsteile Gesamtkautschuk bezogen sind (phr). Die Vergleichsmischungen sind mit V gekennzeichnet, die erfindungsgemäßen Mischungen sind mit E gekennzeichnet.

Die Mischungsherstellung erfolgte unter üblichen Bedingungen in zwei Stufen in einem Labortangentialmischer. Aus sämtlichen Mischungen wurden Prüfkörper durch optimale Vulkanisation unter Druck bei 160 ˚C hergestellt und mit diesen Prüfkörpern für die Kautschukindustrie typische Materialeigenschaften bestimmt, die in den Tabellen 2 und 4 aufgelistet sind. Für die Tests an Prüfkörpern wurden folgende Testverfahren angewandt:

- Zugfestigkeit bei Raumtemperatur gemäß DIN 53 504
- Bruchdehnung bei Raumtemperatur gemäß DIN 53 504
- statischer Modul (Spannungswerte) bei 50, 100, 200 und 300 % Dehnung bei Raumtemperatur (RT) gemäß DIN 53 504
- Shore-A-Härte bei Raumtemperatur (RT) und 70 ˚C gemäß DIN 53 505
- Rückprallelastizität bei Raumtemperatur und 70 ˚C gemäß DIN 53 512
- Bruchenergiedichte bestimmt im Zugversuch nach DIN 53 504, wobei die Bruchenergiedichte die bis zum Bruch erforderliche Arbeit, bezogen auf das Volumen der Probe, ist
- Wärmeleitfähigkeit mit dem Gerät Kemtherm QTM-D3-PD3 der Firma Kyoto Electronics gemäß DIN 52 612 (Ausgangstemperatur: Raumtemperatur)

**Tabelle 1**

| Bestandteile | Einheit | V1 | V2 | V3 | V4 | V5 | E6 | V7 | E8 | E9 |
|---|---|---|---|---|---|---|---|---|---|---|
| Naturkautschuk | phr | 100 | 100 | 100 | 100 | 100 | 100 | 100 | 100 | 100 |
| Ruß N121[a] | phr | 50 | 0 | 0 | 0 | 0 | 0 | 30 | 30 | 38 |
| Ruß N339[b] | phr | 0 | 50 | 0 | 0 | 0 | 0 | 0 | 0 | 0 |
| Ruß N326[c] | phr | 0 | 0 | 50 | 0 | 0 | 0 | 0 | 0 | 0 |
| Ruß N660[d] | phr | 0 | 0 | 0 | 50 | 0 | 0 | 0 | 0 | 0 |
| Acetylenruß[e] | phr | 0 | 0 | 0 | 0 | 50 | 0 | 20 | 0 | 0 |
| Ruß SCD205[f] | phr | 0 | 0 | 0 | 0 | 0 | 50 | 0 | 20 | 12 |
| Alterungsschutzmittel | phr | 3 | 3 | 3 | 3 | 3 | 3 | 3 | 3 | 3 |
| Ozonschutzwachs | phr | 2,5 | 2,5 | 2,5 | 2,5 | 2,5 | 2,5 | 2,5 | 2,5 | 2,5 |
| Zinkoxid | phr | 3 | 3 | 3 | 3 | 3 | 3 | 3 | 3 | 3 |
| Stearinsäure | phr | 2 | 2 | 2 | 2 | 2 | 2 | 2 | 2 | 2 |
| Beschleuniger | phr | 1 | 1 | 1 | 1 | 1 | 1 | 1 | 1 | 1 |

(fortgesetzt)

| Bestandteile | Einheit | V1 | V2 | V3 | V4 | V5 | E6 | V7 | E8 | E9 |
|---|---|---|---|---|---|---|---|---|---|---|
| Schwefel | phr | 1,65 | 1,65 | 1,65 | 1,65 | 1,65 | 1,65 | 1,65 | 1,65 | 1,65 |

[a] Ruß N121 mit einer Jodadsorptionszahl von 118 g/kg, einer DBP-Zahl von 128 $cm^3$/g und einer BET-Oberfläche von 120 $m^2$/g

[b] Ruß N339 mit einer Jodadsorptionszahl von 90 g/kg, einer DBP-Zahl von 120 $cm^3$/g und einer BET-Oberfläche von 89 $m^2$/g

[c] Ruß N326 mit einer Jodadsorptionszahl von 82 g/kg, einer DBP-Zahl von 72 $cm^3$/g und einer BET-Oberfläche von 80 $m^2$/g

[d] Ruß N660 mit einer Jodadsorptionszahl von 36 g/kg, einer DBP-Zahl von 90 $cm^3$/g und einer BET-Oberfläche von 41 $m^2$/g

[e] Acetylenruß mit einer Jodadsorptionszahl von 88 g/kg, einer DBP-Zahl von 194 $cm^3$/g und einer BET-Oberfläche von 70 $m^2$/g

[f] Ruß SCD205 mit einer Jodadsorptionszahl von 60 g/kg, einer DBP-Zahl von 160 $cm^3$/g und einer BET-Oberfläche von 45 $m^2$/g

Wie der Tabelle 1 entnommen werden kann, unterschieden sich die Kautschukmischungen V1 bis V4 sowie E6 nur durch die Art des zugesetzten Rußes.

Bei den Rußen gemäß V1 bis V4 handelt es sich um so genannte Standard ASTM Ruße. Es handelt sich hierbei um Furnace-Ruße, die hoch abriebbeständig sind und sich durch eine hohe Struktur bei geringer Teilchengröße auszeichnen. Die Eigenschaften der verwendeten Ruße sind oben angegeben.

Acetylenruß wird durch thermische Zersetzung von Acetylen hergestellt. Er zeichnet sich durch eine hohe spezifische Oberfläche, einen überdurchschnittlichen Anteil an graphitähnlichen Strukturen und einen sehr niedrigen Gehalt an sauerstoffhaltigen Gruppen aus. Acetylenruße weisen in der Regel eine DBP-Zahl zwischen 150 und 260 $cm^3$/100 g und eine Jodadsorptionszahl > 85 g/kg auf. Die Teilchendurchmesser der Primärpartikel liegen zwischen 30 und 45 nm.

Wie der Tabelle 1 weiter entnommen werden kann, ist in den Kautschukmischungen V7 und E8 jeweils ein Anteil des Rußes N121 (vgl. V1) zum einen durch Acetylenruß (vgl. V7) und zum anderen durch den erfindungsgemäßen Ruß SCD205 (vgl. E8) ersetzt worden. Hierbei sind jeweils gleiche Anteile ersetzt worden, so dass ein Vergleich der sich daraus ableitbaren Eigenschaften des Vulkanisates gut möglich ist. Schließlich ist in der Kautschukmischung E9 ein geringerer Anteil des Rußes N121 (vgl. V1) durch den erfindungsgemäßen Ruß SCD205 (vgl. E9) ersetzt worden.

Tabelle 2 enthält die Ergebnisse der an den Prüfkörpern nach Tabelle 1 durchgeführten Testverfahren.

**Tabelle 2**

| Eigenschaften | Einheit | V1 | V2 | V3 | V4 | V5 | E6 | V7 | E8 | E9 |
|---|---|---|---|---|---|---|---|---|---|---|
| Zugfestigkeit | MPa | 23 | 24 | 24,8 | 18 | 21 | 16 | 21,5 | 22 | 23,6 |
| Bruchdehnung | % | 475 | 460 | 515 | 522 | 462 | 538 | 488 | 488 | 471 |
| Modul 100 % | MPa | 2,9 | 2,8 | 2,1 | 1,6 | 2,9 | 1,7 | 2,6 | 2,4 | 2,65 |
| Modul 300 % | MPa | 13,5 | 13 | 12,2 | 8,9 | 13,9 | 6 | 13,5 | 12,5 | 14,6 |
| Härte | Shore A | 62,3 | 61,6 | 59,2 | 53,5 | 63,6 | 61,5 | 63,4 | 63,9 | 65,3 |
| Rückpr.elas. bei RT | % | 45,2 | 53,2 | 57,2 | 60,4 | 53,3 | 52,9 | 47,3 | 50,7 | 50,3 |
| Rückpr.elas. bei 70 °C | % | 53,9 | 61 | 64,9 | 70 | 62,4 | 56,6 | 58,3 | 61,2 | 60,6 |
| Bruchenergiedichte | $\frac{J}{cm^3}$ | 42 | 41,4 | 46,1 | 35 | 39,9 | 28,7 | 40,1 | 41 | 43,3 |
| Wärmeleitfähigkeit | $\frac{W}{m \cdot K}$ | 0,2701 | 0,2759 | 0,2699 | 0,2811 | 0,3977 | 0,4788 | 0,325 | 0,3561 | 0,321 |
| Wärmeleitfähigkeit | % | 100 | 102 | 100 | 104 | 147 | 177 | 120 | 132 | 119 |

**EP 1 983 021 B1**

Aus der Tabelle 2 wird ersichtlich, welchen Einfluss der Einsatz des erfindungsgemäßen Rußes auf die Eigenschaften des aus der jeweiligen Kautschukmischung hergestellten Vulkanisates hat. Insbesondere die Wärmeleitfähigkeit des Vulkanisates wird bei Verwendung des erfindungsgemäßen Rußes signifikant erhöht. Dies zeigt sich besonders deutlich bei einem Vergleich von V5 und E6.

Besonders interessant ist auch ein Vergleich der Vulkanisateigenschaften der Kautschukmischungen V7 und E9. Bei E9 wurde ein geringer Anteil des Rußes N121 durch den erfindungsgemäßen Ruß SCD205 ersetzt als bei V7 durch Acetylenruß. Bei gleicher Wärmeleitfähigkeit besitzt das Vulkanisat nach E9 vorteilhaft ein deutlich höheres Modul 300%. Dies zeigt, dass sich mögliche durch die Verwendung des erfindungsgemäßen Rußes unvorteilhafte mechanische Eigenschaften (vgl. Modul 300% bei E6) durch Kombination mit anderen Füllstoffen, insbesondere anderen Rußen aufgehoben werden können, während andere Vulkanisateigenschaften bei Verwendung solcher Mischungen, beispielsweise für einen Reifenlaufstreifen, nicht in Mitleidenschaft gezogen werden.

Es wurden ferner noch Prüfkörper aus den in Tabelle 3 aufgeführten Mischungen hergestellt.

**Tabelle 3**

| Bestandteile | Einheit | V1 | V10 | E11 | V7 | E8 | V12 | E9 |
|---|---|---|---|---|---|---|---|---|
| Naturkautschuk | phr | 100 | 100 | 100 | 100 | 100 | 100 | 100 |
| Ruß N121 | phr | 50 | 50 | 50 | 30 | 30 | 38 | 38 |
| Acetylenruß[a] | phr | 0 | 50 | 0 | 20 | 0 | 12 | 0 |
| Ruß SCD205 | phr | 0 | 0 | 50 | 0 | 20 | 0 | 12 |
| Alterungsschutzmittel | phr | 3 | 3 | 3 | 3 | 3 | 3 | 3 |
| Ozonschutzwachs | phr | 2,5 | 2,5 | 2,5 | 2,5 | 2,5 | 2,5 | 2,5 |
| Zinkoxid | phr | 3 | 3 | 3 | 3 | 3 | 3 | 3 |
| Stearinsäure | phr | 2 | 2 | 2 | 2 | 2 | 2 | 2 |
| Beschleuniger | phr | 1 | 1 | 1 | 1 | 1 | 1 | 1 |
| Schwefel | phr | 1,65 | 1,65 | 1,65 | 1,65 | 1,65 | 1,65 | 1,65 |

Wie der Tabelle 3 entnommen werden kann, wurde in der Versuchsreihe der Anteil an Ruß N121 (vgl. V1) durch gleiche Anteile von Acetylenruß oder Ruß SCD205 (vgl. V10 oder E11) ergänzt oder durch verschiedene Anteile von Acetylenruß oder Ruß SCD205 ausgetauscht (vgl. V7, E8, V12 und E9).

Wie in Tabelle 4 ausgeführt, wurde an den einzelnen Prüfkörpern die Wärmeleitfähigkeit in W/m * K bestimmt. Weiterhin wurde die Wärmeleitfähigkeit der V1 gleich 100 % gesetzt. Werte größer als 100 bedeuten eine Verbesserung der entsprechenden Eigenschaft.

Schließlich wurde noch die Wärmeleitfähigkeitserhöhung pro phr des ausgetauschten Rußes N121 berechnet.

**Tabelle 4**

| Eigenschaften | Einheit | V1 | V10 | E11 | V7 | E8 | V12 | E9 |
|---|---|---|---|---|---|---|---|---|
| Wärmeleitfähigkeit | $\dfrac{W}{m \cdot K}$ | 0,2701 | 0,3977 | 0,4788 | 0,325 | 0,3561 | 0,2992 | 0,321 |
| Wärmeleitfähigkeit | % | 100 | 147 | 177 | 120 | 132 | 111 | 119 |
| Wärmeleitfähigkeitserhöhung pro phr ausgetauschtem N121 | % | - | 0,94 | 1,54 | 1 | 1,60 | 0,92 | 1,58 |

Aus Tabelle 4 wird ersichtlich, dass bei Verwendung des Rußes SCD205 in Ergänzung (vgl. E11) oder im Austausch (vgl. E8 und E9) des Rußes N121 im Vergleich zur Verwendung eines Acetylenrußes in Ergänzung (vgl. V10) oder im Austausch (vgl. V7 und V12) des Rußes N121 deutlich stärkere Wärmeleitfähigkeitserhöhungen erreicht werden. Dass bedeutet, dass die Ergänzung oder der Austausch eines so genannten Standard ASTM Rußes, beispielsweise des Rußes N121, in üblichen Kautschukmischungen durch Acetylenruß eine Erhöhung der Wärmeleitfähigkeit von 0,9% bis 1% pro phr ausgetauschtem Standard ASTM Rußes zulässt, während die Ergänzung oder der Austausch des Standard ASTM Rußes in üblichen Kautschukmischung durch das erfindungsgemäße Ruß, vorliegend durch Ruß SCD205, eine Erhöhung der Wärmeleitfähigkeit von 1,5% bis 1,6% pro phr ausgetauschtem Standard ASTM Rußes ermöglicht.

Die Vulkanisate der erfindungsgemäßen Kautschukmischungen E11, E8 und E9 zeichnen sich also im Vergleich zu Kautschukmischungen, die nur Ruß N121 bzw. ergänzend oder im Austausch von Ruß N121 Acetylenruß enthalten, durch eine deutlich verbesserte Wärmeleitfähigkeit aus.

**Patentansprüche**

1. Mit Schwefel vulkanisierbare, zumindest einen Dienkautschuk aufweisende Kautschukmischung, vorzugsweise für den Laufstreifen eines Reifens, insbesondere eines Nutzfahrzeugreifens, enthaltend
   - 5 - 60 phr eines behandelten Rußes
   mit a) einer Jodadsorptionszahl von 50 bis 70 g/kg, vorzugsweise von 55 - 65 g/kg, mit b) einer DBP-Zahl von 140 - 260 cm$^3$/100 g, vorzugsweise von 150 - 200 cm$^3$/100 g, besonders bevorzugt von 160 - 170 cm$^3$/100 g, und mit c) einer BET-Oberfläche von 30 - 60 m$^2$/g, vorzugsweise von 40 - 50 m$^2$/g,
   wobei der Ruß mittels eines kontinuierlichen Elektrowärmeofenbehandlungsprozesses herstellbar ist, der Folgendes umfasst:

   a. Bereitstellen eines Elektrowärmeofens, wobei ein Abschnitt des Ofens eine Wirbelzone definiert und ein zweiter Abschnitt eine Überbettzone definiert; und mehrerer Düsen zum Einleiten von Wirbelgas in den Ofen;
   b. Einleiten eines nicht-reaktiven Wirbelgases durch die Düsen, dergestalt, dass das Gas einen Aufwärtsstrom in dem Ofen definiert;
   c. Einleiten von unbehandeltem Ruß in den Ofen mit einer zuvor festgelegten Rate, dergestalt, dass der Ruß eine Wirbelschicht bildet;
   d. Beaufschlagen einer Elektrode in dem Ofen mit Energie, um die Wirbelschicht zu erwärmen; und
   e. kontinuierliches Auffangen des behandelten Rußes aus einem Ofenausgaberohr.

2. Kautschukmischung nach Anspruch 1, **dadurch gekennzeichnet, dass** der Ruß thermischer Ruß und/oder Ofenruß ist.

3. Kautschukmischung nach Anspruch 1 oder 2, **dadurch gekennzeichnet, dass** die Wärmebehandlung zwischen 800 und 3000˚C erfolgt.

4. Kautschukmischung nach einem der Ansprüche 1 bis 3, **dadurch gekennzeichnet, dass** diese 5 bis 15 phr des behandelten Rußes enthält.

5. Kautschukmischung nach einem der Ansprüche 1 bis 4 **dadurch gekennzeichnet, dass** diese zusätzlich 20 bis 45 phr eines hoch abriebbeständigen Rußes mit einer Jodadsorptionszahl von mehr als 100 bis 170 g/kg und einer DBP-Zahl von 90 - 140 cm$^3$/100g enthält.

6. Kautschukmischung nach einem der Ansprüche 1 bis 4, **dadurch gekennzeichnet, dass** diese zusätzlich 20 bis 45 phr eines Rußes mit einer Jodadsorptionszahl von 60 - 100 g/kg und einer DBP-Zahl von 70-140 cm$^3$/100g enthält.

7. Kautschukmischung nach einem der Ansprüche 1 bis 6, **dadurch gekennzeichnet, dass** diese zumindest 95 phr Naturkautschuk enthält.

8. Kautschukmischung nach einem der Ansprüche 1 bis 7, **dadurch gekennzeichnet, dass** diese keinen Acetylenruß enthält.

9. Reifen, insbesondere Nutzfahrzeugreifen, dessen Laufstreifen zumindest zum Teil aus einer mit Schwefel vulkanisierten Kautschukmischung nach einem der Ansprüche 1 bis 5 oder nach einem der auf diese rückbezogenen Ansprüche 7 oder 8 besteht.

**Claims**

1. Sulphur-vulcanizable rubber mixture comprising at least one diene rubber and preferably intended for the tread of a tyre, in particular of a commercial-vehicle tyre, comprising

   - 5 to 60 phr of a treated carbon black
   with a) iodine adsorption number of from 50 to 70 g/kg, preferably from 55 to 65 g/kg, with b) DBP number of from 140 to 260 cm$^3$/100 g, preferably from 150 to 200 cm$^3$/100 g, particularly preferably from 160 to 170 cm$^3$/100 g, and with c) BET surface area of from 30 to 60 m$^2$/g, preferably from 40 to 50 m$^2$/g,

where the carbon black can be produced by means of a continuous electric-furnace treatment process, which encompasses the following:

a. provision of an electric furnace, where a section of the furnace defines a fluidization zone and a second section defines an over-bed zone; and of a plurality of nozzles for passing fluidization gas into the furnace;
b. passing a non-reactive fluidization gas through the nozzles in such a way that the gas defines an upwards stream within the furnace;
c. passing untreated carbon black into the furnace at a predetermined rate, in such a way that the carbon black forms a fluidized bed;
d. applying energy to an electrode within the furnace, in order to heat the fluidized bed; and
e. continuously collecting the treated carbon black from a furnace-output pipe.

2. Rubber mixture according to Claim 1, **characterized in that** the carbon black is thermal black and/or furnace black.

3. Rubber mixture according to Claim 1 or 2,
   **characterized in that** the heat treatment takes place at from 800 to 3000˚C.

4. Rubber mixture according to any of Claims 1 to 3, **characterized in that** it comprises from 5 to 15 phr of the treated carbon black.

5. Rubber mixture according to any of Claims 1 to 4, **characterized in that** this also comprises from 20 to 45 phr of a highly abrasion-resistant carbon black with iodine adsorption number of more than 100 to 170 g/kg and with DBP number of from 90 to 140 cm$^3$/100 g.

6. Rubber mixture according to any of Claims 1 to 4, **characterized in that** this also comprises from 20 to 45 phr of a carbon black with iodine adsorption number of from 60 to 100 g/kg and with DBP number of from 70 to 140 cm$^3$/100 g.

7. Rubber mixture according to any of Claims 1 to 6, **characterized in that** this comprises at least 95 phr of natural rubber.

8. Rubber mixture according to any of Claims 1 to 7, **characterized in that** this comprises no acetylene black.

9. Tyre, in particular commercial-vehicle tyre, the tread of which is at least to some extent composed of a sulphur-vulcanized rubber mixture according to any of Claims 1 to 5 or according to either of Claims 7 and 8, which are dependent on the said claims.

**Revendications**

1. Mélange de caoutchoucs vulcanisable avec du soufre, présentant au moins un caoutchouc de diène, de préférence pour la bande de roulement d'un pneu, en particulier d'un pneu pour véhicule utilitaire, contenant

- 5-60 parties par cent parties d'une suie traitée présentant a) un indice d'absorption d'iode de 50 à 70 g/kg, de préférence de 55 à 65 g/kg, présentant b) un indice DBP de 140-260 cm$^3$/100 g, de préférence de 150-200 cm$^3$/100 g, de manière particulièrement préférée de 160-170 cm$^3$/100 g, et présentant c) une surface BET de 30-60 m$^2$/g, de préférence de 40-50 m$^2$/g,

où la suie peut être préparée au moyen d'un processus de traitement dans un four thermique électrique continu, qui comprend ce qui suit :

a. mise à disposition d'un four thermique électrique, où une section du four définit une zone tourbillonnante et une deuxième section définit une zone au-dessus de ce lit ; et plusieurs pulvérisateurs pour introduire le gaz de tourbillonnement dans le four ;
b. introduction d'un gaz de tourbillonnement non réactif via les pulvérisateurs, de manière telle que le gaz définit un flux ascendant dans le four ;

c. introduction de suie non traitée dans le four à une vitesse définie au préalable, de manière telle que la suie forme une couche tourbillonnante ;

d. alimentation d'une électrode dans le four en énergie pour chauffer la couche tourbillonnante ; et

e. récupération continue de la suie traitée à la sortie d'un tuyau d'évacuation du four.

**2.** Mélange de caoutchoucs selon la revendication 1, **caractérisé en ce que** la suie est de la suie thermique et/ou du noir de fourneau.

**3.** Mélange de caoutchoucs selon la revendication 1 ou 2, **caractérisé en ce que** le traitement thermique est réalisé entre 800 et 3000˚C.

**4.** Mélange de caoutchoucs selon l'une quelconque des revendications 1 à 3, **caractérisé en ce qu'**il contient 5 à 15 parties par cent parties de suie traitée.

**5.** Mélange de caoutchoucs selon l'une quelconque des revendications 1 à 4, **caractérisé en ce qu'**il contient en outre 20 à 45 parties par cent parties d'une suie hautement résistante à l'abrasion présentant un indice d'absorption d'iode supérieur à 100 jusqu'à 170 g/kg et un indice DBP de 90-140 cm$^3$/100 g.

**6.** Mélange de caoutchoucs selon l'une quelconque des revendications 1 à 4, **caractérisé en ce qu'**il contient en outre 20 à 45 parties par cent parties d'une suie présentant un indice d'absorption d'iode supérieur à 60 jusqu'à 100 g/kg et un indice DBP de 70-140 cm$^3$/100 g.

**7.** Mélange de caoutchoucs selon l'une quelconque des revendications 1 à 6, **caractérisé en ce qu'**il contient au moins 95 parties par cent parties de caoutchouc naturel.

**8.** Mélange de caoutchoucs selon l'une quelconque des revendications 1 à 7, **caractérisé en ce qu'**il ne contient pas de suie d'acétylène.

**9.** Pneus, en particulier pneus de voiture utilitaire, dont la bande de roulement est constituée, du moins en partie, d'un mélange de caoutchoucs vulcanisable avec du soufre selon l'une quelconque des revendications 1 à 5 ou selon l'une quelconque des revendications 7 ou 8 se rapportant à celles-ci.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE OS1755301 A
- EP 1031441 A
- US 3954131 A
- WO 2005028569 A2
- US 20050062205 A1

**In der Beschreibung aufgeführte Nicht-Patentliteratur**

- **J. SCHNETGER.** Lexikon der Kautschuktechnik. Hüthig Buch Verlag, 1991, 42-48